# FASCICULE DE BREVET EUROPEEN

(11) **EP 0 721 061 B1**
(45) Date de publication et mention de la délivrance du brevet: **22.04.1998**
(21) Numéro de dépôt: 96400015.2
(22) Date de dépôt: 04.01.1996
(51) Int. Cl.: F02C 7/14

(54) **Système de régulation des températures de l'huile et de carburant dans un turboréacteur**
Temperaturregelungssystem für Schmieröl und Brennstoff in einem Turbostrahltriebwerk
Temperature control system for lubricant and fuel of a jet engine

(30) Priorité: 04.01.1995 FR 9500031
(43) Date de publication de la demande: 10.07.1996
(73) Titulaire: SOCIETE NATIONALE D'ETUDE ET DE CONSTRUCTION DE MOTEURS D'AVIATION, "S.N.E.C.M.A.", 75015 Paris (FR)
(72) Inventeur: Beutin, Bruno, Albert, F-91100 - Corbeil Essonnes (FR); Garnier, Françis, Georges Albert, 77720 - Bombon (FR); Creti, Joel, F-77260 - Ussy/Marne (FR); Hugues, Michel Georges, F-77590 Bois le Roi (FR); Donnadieu, Jean-Pierre, F-91590 - Longueville (FR); Lecordix, Jean-Loic, Hervé, F-77000 - Vaux le Penil (FR); Maignan, Claude Paul Henri, F-77176 - Savigny le Temple (FR); Massot, Gilles Claude Gabriel, F-77950 - Voisenon (FR); Thorel, Christophe Jean François, F-75020 - Paris (FR); Touron, Carole Claudine, F-91070 - Bondoufle (FR); Vennin, Gérard Marie René Marcel, F-77440 - Cesson (FR); Pincemin,Jean-Marie,Noel, F-91560-Crosne (FR)

(56) Documents cités:
- DE-B- 1 195 088
- GB-A- 519 752
- US-A- 4 151 710
- US-A- 4 741 152
- US-A- 4 969 796
- US-A- 5 121 598
- US-A- 5 253 470

## Description

La présente invention concerne la régulation des températures de l'huile et du carburant des moteurs d'aviation, par transfert de chaleur entre l'huile et le carburant.

Elle concerne plus précisément un système de régulation des températures dans un turboréacteur équipé d'un alternateur entraîné mécaniquement à vitesse constante par une partie tournante dudit turboréacteur. Ces turboréacteurs comportent deux circuits d'huile séparés : un premier circuit fermé pour la circulation et le refroidissement de l'huile de lubrification des structures internes du turboréacteur tels que les paliers, et un deuxième circuit fermé pour la circulation et le refroidissement de l'huile de lubrification des moyens d'entraînement de l'alternateur. D'autre part, le débit de carburant qui alimente les dispositifs d'injection du turboréacteur en fonctionnement est délivré par un circuit de carburant qui prélève du carburant frais dans les ailes. Pour faciliter la combustion, le carburant est chauffé dans le circuit de carburant jusqu'à une température limite haute qui ne doit pas être dépassée si on ne veut pas provoquer une vaporisation partielle ou une décomposition du carburant qui entraînent un dysfonctionnement des pompes et des équipements de régulation du moteur.

Les débits de carburant sont fonction des ordres donnés par le pilote. Le débit d'huile dans le premier circuit fermé est fonction de la vitesse de rotation du turboréacteur, et la chaleur véhiculée par cette huile est fonction de la charge du turboréacteur. En revanche, l'alternateur étant entraîné à vitesse constante, le débit d'huile du deuxième circuit fermé est sensiblement constant et la chaleur véhiculée par cette huile est fonction de la demande électrique de l'aéronef, et des dégagements thermiques des transmissions mécaniques intégrées qui relient l'alternateur à une partie tournante du turboréacteur. Ces transmissions mécaniques dissipent beaucoup de chaleur, même lorsque les moteurs qui les entraînent tournent au ralenti. L'énergie thermique dissipée dans le deuxième circuit d'huile représente 5 à 15 % de celle dissipée dans le circuit d'huile du moteur, lors d'un fonctionnement à pleine puissance et peut atteindre 50 % dans des conditions de ralenti.

Les études actuelles et les évolutions possibles des turboréacteurs à grand taux de dilution envisagent d'utiliser des réducteurs de vitesse de rotation pour l'entraînement en rotation de la soufflante. C'est aussi le cas pour les turbopropulseurs pour la liaison du moteur et de l'hélice.

Ces réducteurs de vitesse transmettent des puissances importantes et ainsi l'échauffement des composants du réducteur est important. Un refroidissement efficace de l'huile du premier circuit fermé doit être mis en place pour maintenir un niveau de température acceptable. Dans un moteur équipé d'un réducteur de vitesse la puissance thermique dissipée est environ deux fois plus importante que celle dissipée dans un moteur conventionnel. Cette chaleur est évacuée par un débit d'huile important.

Il est déjà connu de refroidir l'huile par des échangeurs de chaleur huile/carburant qui réchauffent le carburant délivré au moteur.

Or, la température du carburant ne doit pas être supérieure à 150°C. Du fait de l'excellent rendement des turboréacteurs à réducteur et grand taux de dilution, le débit du carburant dans le moteur n'est plus suffisant pour évacuer la chaleur dissipée par les transmissions des alternateurs et par l'huile de lubrification du moteur.

Il a déjà été proposé d'évacuer la chaleur dissipée par les transmissions de l'alternateur par un circuit spécial de carburant qui retourne le carburant réchauffé vers les ailes de l'avion, la surface des ailes jouant le rôle d'échangeur de chaleur carburant/air. Dans les pays chauds, cette solution présente l'inconvénient de surchauffer le carburant dans les ailes lorsque l'avion attend trop longtemps au sol le moment du décollage, les moteurs étant en rotation. Il faut alors arrêter les moteurs, vidanger le carburant chaud et le remplacer par du carburant frais.

D'autre part, par temps froid, le démarrage des moteurs comportant des réducteurs est long et difficile, car l'huile est très visqueuse, voire figée.

L'état de la technique est illustré par les brevets US-4 151 710, US-4 741 152, US-5 121 598 et US-5 253 470.

Le brevet US-4 151 710 décrit un système de refroidissement des huiles d'un turboréacteur dans lequel le refroidissement de l'huile de lubrification des entraînements de l'alternateur est réalisé par un deuxième échangeur air/huile monté en série avec un échangeur de chaleur huile/carburant disposé en aval d'un premier échangeur de chaleur huile/carburant du premier circuit fermé dans le sens de l'écoulement du carburant. Il est prévu que, dans les phases de descente de l'avion, le carburant surchauffé par suite de la recirculation du carburant est refroidi par l'huile du deuxième circuit fermé dans le deuxième échangeur de chaleur, ce qui nécessite l'emploi d'un échangeur de chaleur air/huile dans le deuxième circuit fermé.

Le brevet US-4 741 152 décrit un système correspondant au préambule de la revendication 1, ayant deux circuits de lubrification qui comportent chacun un échangeur de chaleur air/huile et un échangeur de chaleur huile/carburant. L'échangeur de chaleur huile/carburant du circuit de refroidissement de l'huile de lubrification des entraînements de l'alternateur est disposé en amont de l'autre échangeur de chaleur huile/carburant sur le circuit carburant.

Les dispositions proposées dans ces deux documents ne permettent pas de réchauffer l'huile du premier circuit fermé par l'huile du deuxième circuit fermé lors du démarrage du turboréacteur par temps froid.

Le brevet US-5 121 598 montre un dispositif de refroidissement de l'huile de lubrification des entraînements de l'alternateur qui comporte un échangeur de chaleur huile/carburant sur un circuit de retour de carburant aux réservoirs d'aile.

Le brevet US-5 253 470 décrit un dispositif de réchauffage de l'huile avec la chaleur dégagée par le démarreur.

Le but de la présente invention est de proposer un système de régulation des températures dans un turboréacteur du type mentionné ci-dessus qui pallie les inconvénients mentionnés ci-dessus et qui permette notamment de faciliter ie démarrage par temps froid, d'éviter la surchauffe du carburant dans les ailes lorsque le turboréacteur est en rotation au sol par temps chaud, et de réchauffer suffisamment le carburant en vol en altitude.

L'invention atteint son but par le fait que le système de régulation des températures proposé comporte :
- un échangeur de chaleur huile/huile prévu entre le premier circuit d'huile fermé et le deuxième circuit d'huile fermé et situé en aval dudit échangeur de chaleur huile/carburant, dans le sens de l'écoulement de l'huile dans ledit premier circuit d'huile fermé, ledit échangeur de chaleur huile/huile étant destiné à refroidir l'huile circulant dans ledit deuxième circuit fermé par réchauffement de l'huile du premier circuit fermé qui traverse ledit échangeur de chaleur huile/huile.

Il est prévu, en outre, des moyens pour régler le débit d'huile prélevé dans le premier circuit fermé et traversant chacun desdits échangeurs de chaleur, en fonction des conditions de vol et des températures.

Grâce à cette disposition, l'huile de lubrification des moyens d'entraînement de l'alternateur réchauffe l'huile du premier circuit fermé dans toutes les conditions de vol, et notamment lors du démarrage à froid. De plus, cet échangeur de chaleur étant du type huile/huile, il n'y a pas de risque de pollution des circuits fermés par un fluide de nature · différente en cas de fuite dans ledit échangeur. La chaleur dégagée par les moyens d'entraînement de l'alternateur n'est pas dissipée dans le carburant contenu dans les réservoirs des ailes, ce qui supprime les inconvénients de la surchauffe du carburant dans les ailes lorsque l'avion attend trop longtemps au sol le moment du décollage dans les pays chauds. Enfin, la chaleur disponible dans l'huile du moteur est augmentée par l'apport de chaleur supplémentaire issue des moyens d'entraînement de l'alternateur. En vol, en altitude, la chaleur disponible dans l'huile du moteur devient suffisante pour réchauffer le carburant froid. L'écart entre la température du carburant froid et la température de l'huile circulant dans le premier circuit fermé est augmenté dans toutes les conditions de vol, ce qui améliore l'échange thermique et autorise un échangeur huile/carburant de plus faible volume.

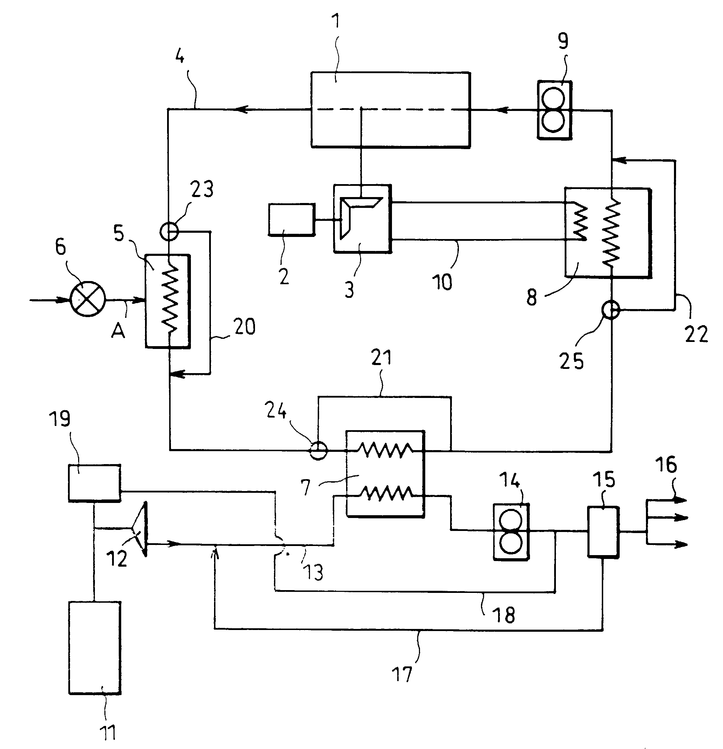

D'autres avantages et caractéristiques de l'invention ressortiront à la lecture de la description suivante faite à titre d'exemple non limitatif et en référence au dessin unique annexé, qui représente un schéma de principe des circuits d'huile et de carburant dans un turboréacteur selon la présente invention.

Le dessin montre un turboréacteur 1 dont une partie mobile en rotation entraîne un alternateur 2 à vitesse constante via une transmission mécanique intégrée 3.

La chaleur dissipée dans le turboréacteur 1 est véhiculée à l'extérieur par un premier circuit fermé 4 qui comporte dans le sens de l'écoulement de l'huile un échangeur de chaleur 5 du type air/huile dans lequel circule un air de refroidissement A prélevé dans le flux froid par un volet commandé 6 un échangeur de chaleur 7 de type huile/carburant, un échangeur de chaleur 8, de type huile/huile et une pompe à huile 9 entraînée directement par le turboréacteur 1.

L'huile de lubrification de la transmission mécanique intégrée 3 de l'alternateur 2 circule dans un deuxième circuit fermé 10 qui passe par l'échangeur de chaleur huile/huile 8 dans lequel l'huile circulant dans le deuxième circuit 10 est refroidie par réchauffement de l'huile du premier circuit fermé 4.

Le carburant est prélevé dans le réservoir 11 situé dans l'aile de aéronef par une pompe de gavage 12, puis transite, via le circuit de carburant 13, à travers l'échangeur de chaleur 7, la pompe à haute pression 14 et le régulateur 15 de débit de carburant. Le régulateur de débit 15 alimente les injecteurs de carburant 16 du turboréacteur de la quantité de carburant nécessaire en fonction des ordres reçus du poste de pilotage et recycle le surplus de carburant fourni par la pompe à haute pression par un circuit de recirculation 17 vers la pompe de gavage 12 ou le réservoir 11. Une conduite 18 prélève du carburant à haute pression dans le circuit de carburant 13 entre la pompe à haute pression 14 et le régulateur de débit 15 afin d'alimenter les commandes 19 hydrauliques du moteur, utilisant le carburant, tels que les vérins.

Le premier circuit fermé 4 comporte, en outre, des conduites de dérivation, respectivement 20, 21 et 22, entre l'entrée et la sortie de chacun des échangeurs de chaleur 5, 7 et 8, afin de régler le débit d'huile les traversant sous l'action de vannes 23, 24 et 25 commandés par un système de contrôle en fonction des conditions de vol, des températures des différents fluides et de valeurs de consigne.

Au démarrage par temps froid, les vannes 23 et 25 sont positionnées de telle manière que toute l'huile circulant dans le premier circuit fermé 4 passe par la conduite de dérivation 20 d'une part et par l'échangeur de chaleur 8 huile/huile permettant ainsi de réchauffer l'huile fournie au moteur par la pompe à huile 9, au moyen de la chaleur prélevé dans le deuxième circuit fermé 10.

## Revendications

1. Système de régulation des températures de l'huile et du carburant dans un turboréacteur (1) équipé d'un alternateur (2) entraîné mécaniquement à vitesse constante par une partie tournante dudit turboréacteur, ledit turboréacteur (1) comportant un premier circuit fermé (4) pour la circulation et le refroidissement de l'huile de lubrification dudit turboréacteur (1), un deuxième circuit fermé(10) pour la circulation et le refroidissement de l'huile de lubrification des moyens d'entraînement (3) de l'alternateur, un circuit de carburant (13) destiné à délivrer un débit de carburant audit turboréacteur (1), et
des moyens de régulation des températures du carburant et de l'huile de chacun desdits circuits fermés, et
- un échangeur de chaleur huile/carburant(7) prévu entre le premier circuit d'huile fermé (4) et le circuit de carburant (13) et destiné à réchauffer le carburant par refroidissement de l'huile traversant ledit échangeur de chaleur (7), et
- un échangeur de chaleur air/huile (5) prévu dans le premier circuit d'huile fermé (4) et situé en amont dudit échangeur de chaleur huile/carburant (7), dans le sens de l'écoulement de l'huile dans ledit premier circuit d'huile fermé (4),
caractérisé par le fait que les moyens de régulation de température comportent :
- un échangeur de chaleur huile/huile (8) prévu entre le premier circuit d'huile fermé (4) et le deuxième circuit d'huile fermé (10) et situé en aval dudit échangeur de chaleur huile/carburant (7), dans le sens de l'écoulement de l'huile dans ledit premier circuit d'huile fermé (4), ledit échangeur de chaleur huile/huile (8) étant destiné à refroidir l'huile circulant dans ledit deuxième circuit fermé (10) par réchauffement de l'huile du premier circuit fermé (4) qui traverse ledit échangeur de chaleur huile/huile (8).

2. Système selon la revendication 1, caractérisé par le fait que les moyens de régulation des températures comportent, en outre, des moyens (20, 21, 22, 23, 24, 25) pour régler le débit d'huile prélevé dans le premier circuit fermé (4) et traversant chacun desdits échangeurs de chaleur (5, 7, 8), en fonction des conditions de vol et des températures.

## Patentansprüche

1. Temperatur-Steuersystem für Öl und Treibstoff einer Turbomaschine (1), die mit einem Generator (2) versehen ist, der mechanisch mit konstanter Geschwindigkeit durch ein Drehelement der Turbomaschine angetrieben wird, wobei die Turbomaschine (1) einen ersten geschlossenen Kreislauf (4) zur Zirkulation und zur Kühlung des Schmieröls der Turbomaschine (1), einen zweiten geschlossenen Kreislauf (10) zur Zirkulierung und Kühlung des Schmieröls der Antriebseinrichtungen (3) des Generators sowie einen Treibstoff-Kreislauf (13) aufweist, der zur Zufuhr einer Treibstoffmenge zu der Turbomaschine (1) dient, und mit
Temperatur-Steuereinrichtungen für den Treibstoff und das Öl in jedem der geschlossenen Kreisläufe, sowie
- einem Öl/Treibstoff-Wärmetauscher (7), der zwischen dem ersten geschlossenen Ölkreislauf (4) und dem Treibstoff-Kreislauf (13) vorgesehen ist und zur Erwärmung des Treibstoffs durch Kühlung des durch den Wärmetauscher (7) hindurchgehenden Öls dient, und
- einen Luft/Öl-Wärmetauscher (5), der in dem ersten geschlossenen Ölkreislauf (4) vorgesehen ist, und stromaufwärts des Öl/Treibstoff-Wärmetauschers (7) in Flußrichtung des Öls in dem ersten geschlossenen Ölkreislauf (4) vorgesehen ist,
**dadurch gekennzeichnet**, daß die Temperatur-Steuereinrichtungen aufweisen:
- einen Öl/Öl-Wärmetauscher (8), der zwischen dem ersten geschlossenen Ölkreislauf (4) und dem zweiten geschlossenen Ölkreislauf (10) vorgesehen ist und stromabwärts des Öl/Treibstoff-Wärmetauschers (7) in der Flußrichtung des Öls in dem ersten geschlossenen Ölkreislauf (4) vorgesehen ist, wobei der Öl/Öl-Wärmetauscher (8) zur Kühlung des Öls dient, das in den zweiten geschlossenen Kreislauf (10) strömt, durch Erwärmung des Öls des ersten geschlossenen Kreislaufs (4), das den Öl/Öl-Wärmetauscher (8) durchströmt.

2. System nach Anspruch 1,
**dadurch gekennzeichnet**, daß die Temperatur-Steuereinrichtungen weiterhin Einrichtungen (20, 21, 22, 23, 24, 25) zur Steuerung der Ölmenge aufweisen, die in dem ersten geschlossenen Kreislauf (4) entnommen wird und jeden der Wärmetauscher (5, 7, 8) abhängig von Flug- und Temperaturbedingungen durchströmt.

## Claims

1. A system for controlling the oil and fuel temperatures of a turbojet engine (1) having an alternator (2) driven mechanically at a constant speed by a rotating part of the engine, which engine (1) comprises a first closed circuit (4) for the circulation and cooling of the engine lubricating oil, a second closed circuit (10) for the circulation and cooling of the lubricating oil of the alternator drive means (3), a fuel circuit (13) for delivering fuel to the engine (1), and
means for controlling the temperatures of the fuel and the oil of each of the closed circuits, and
an foil/fuel heat exchanger (7) disposed between the first closed oil circuit (4) and the fuel circuit (13) and serving to heat the fuel by cooling the oil flowing through the heat exchanger (7), and
an air-oil heat exchanger (5) disposed in the first closed oil circuit (4) upstream of the oil-fuel heat exchanger (7) as considered in the oil flow direction in the first closed oil circuit (4),
charaterised in that the temperature control means comprises an oil/oil heat exchanger (8) disposed between the first closed oil circuit (4) and the second closed oil circuit (10) downstream of the oil/fuel heat exchanger (7) as considered in the oil flow direction in the first closed oil circuit (4), the oil/oil heat exchanger (8) serving to cool the oil flowing in the second closed circuit (10) by heating of the oil of the first closed circuit (4) which flows through the oil/oil heat exchanger (8).

2. A system according to claim 1, characterised in that the temperature control means also comprises means (20-25) for controlling the oil delivery taken from the first closed circuit (4) and flowing through each of the heat exchangers (5, 7, 8) in dependence upon flight conditions and upon temperatures.
